(19) Europäisches Patentamt
European Patent Office
Office européen des brevets

(11) EP 2 061 162 A1

(12) EUROPEAN PATENT APPLICATION

(43) Date of publication:
20.05.2009 Bulletin 2009/21

(51) Int Cl.:
*H04B 7/06* (2006.01)

(21) Application number: 07425725.4

(22) Date of filing: 15.11.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK RS

(71) Applicants:
- Nokia Siemens Networks S.p.A.
20126 Milano (IT)
- Nokia Siemens Networks Oy
02610 Espoo (FI)

(72) Inventor: Sorrentino, Stefano
20133 Milano (IT)

(74) Representative: Kley, Hansjörg
Nokia Siemens Networks GmbH & Co. KG
Intellectual Property Rights
Postfach 80 17 60
81541 München (DE)

# (54) Reduced feedback dynamic codebook transmission method for multi-antenna systems

(57) In a MIMO/MISO system, either: WiMAX, UMTS/WCDMA/EDGE. GSM/GPRS/EDGE, or the like, the CSI (Channel State Information) is quantized dynamically by the receiver and sent back to a transmitter which performs spatial multiplexing or beamforming. The receiver at discrete time $t + 1$ is controlled to:
- estimate a codeword $\mathbf{F}_{t+1}$ according to any suitable optimization method;
- index the codeword $\mathbf{F}_{t+1}$ into a reduced codebook $\Delta(\mathbf{F}_t)$ belonging to a larger codebook $\Phi$ ;
- transmit on the backward channel the state information corresponding to the index of $\mathbf{F}_{t+1}$ spanning the reduced codebook $\Delta(\mathbf{F}_t)$;
- calculate a reduced codebook $\Delta(\mathbf{F}_{t+1})$ including $2^{b\delta}$ orthogonal codewords of $\Phi$ according to the following expression:

$$\Delta(\mathbf{F}_{t+1}) = \{\mathbf{F}_i\} \in \Phi : \max_{\mathbf{F}_i \in \Delta(\mathbf{F}_{t+1})} \left(d(\mathbf{F}_i, \mathbf{F}_{t+1})\right) < \min_{\mathbf{F}_j \notin \Delta(\mathbf{F}_{t+1})} \left(d(\mathbf{F}_j, \mathbf{F}_{t+1})\right),$$

where *i, j* are generic index spanning the elements of codebook $\Phi$, and d (□) is the chordal distance from $\mathbf{F}_{t+1}$:and the transmitter at discrete time $t + 1$ is controlled to:
- receive on the backward channel said index of $\mathbf{F}_{t+1}$ and use it for retrieving $\mathbf{F}_{t+1}$ from the reduced codebook $\Delta(\mathbf{F}_t)$ calculated by the transmitter at discrete time $t$ ;
- multiply the actual sample of the baseband transmission signal by the codeword $\mathbf{F}_{t+1}$ and transmit the product on the forward channel;
- calculate a reduced codebook $\Delta(\mathbf{F}_{t+1})$ according to the same expression used by the receiver (fig.2).

EP 2 061 162 A1

FIG 2

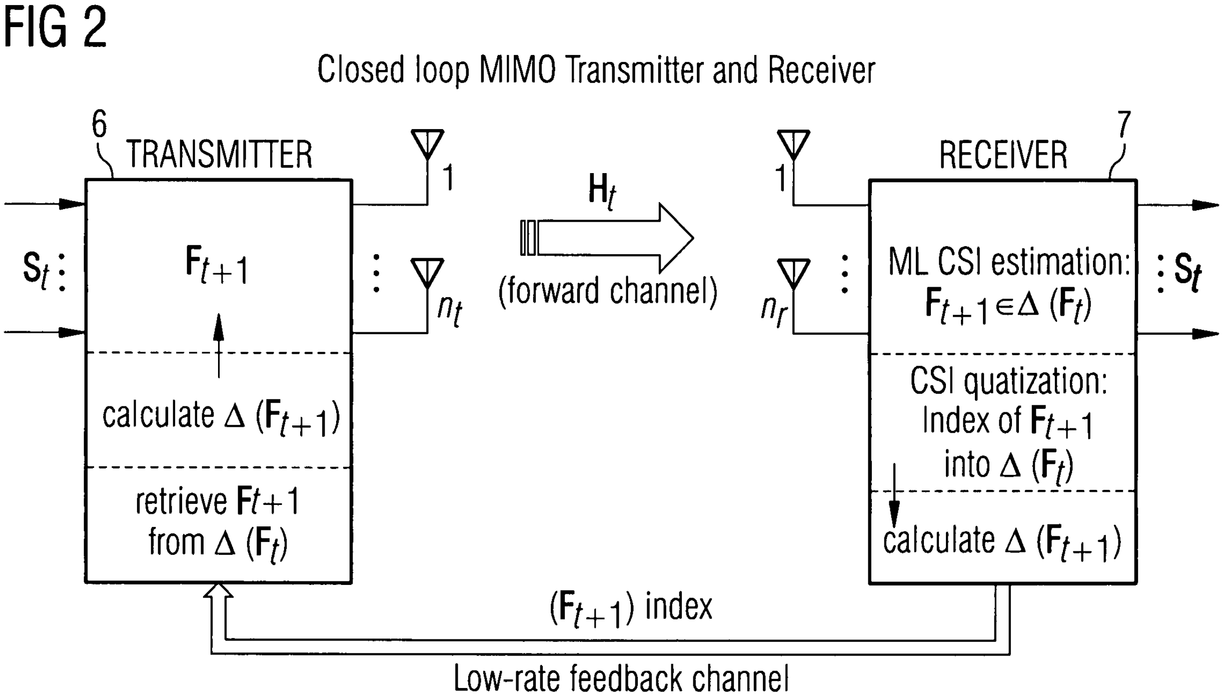
Closed loop MIMO Transmitter and Receiver
6
TRANSMITTER
7
RECEIVER
$S_t$
$F_{t+1}$
calculate Δ ($F_{t+1}$)
retrieve $F_{t+1}$ from Δ ($F_t$)
1
$n_t$
$H_t$
(forward channel)
1
$n_r$
ML CSI estimation: $F_{t+1}$ ∈ Δ ($F_t$)
CSI quatization: Index of $F_{t+1}$ into Δ ($F_t$)
calculate Δ ($F_{t+1}$)
$S_t$
($F_{t+1}$) index
Low-rate feedback channel

## Description

## FIELD OF THE INVENTION

The present invention relates to the field of wireless communication networks, and in particular to a reduced feedback dynamic codebook transmission method for multi-antenna systems. (Used acronyms description and bibliographic references are given at the end of the description).
The invention can be used indifferently in standard and non-standard cellular networks, but some advantages are obviously derived from its possible use in wireless networks conforming with different standards, for example:

- 3GPP GSM and related GPRS, EDGE.
- 3GPP UMTS: WCDMA, FDD/TDD-CDMA, HSDPA, HSUPA, LTE.
- CDMA2000, PCS, UMB, Ambient Networks (AN).
- IEEE std 802.16-2004: "IEEE Computer Society and IEEE Microwave Theory and Techniques Society, "IEEE Standard for Local and Metropolitan Area Networks Part 16: Air Interface for Fixed Broadband Wireless Access Systems", IEEE Std 802.16-2004 (Revision of IEEE Std 802.16-2001), 1 October 2004",

as amended by :

- IEEE 802.16e-2005: "IEEE Computer Society and IEEE Microwave Theory and Techniques Society, "IEEE Standard for Local and Metropolitan Area Networks Part 16: Air Interface for Fixed Broadband Wireless Access Systems", Amendment 2: Physical and Medium Access Control Layers for Combined Fixed and Mobile Operation in Licensed Bands and Corrigendum 1; 28 February 2006"; (see entries: 8.4.8.3.6 and 8.4.5.4.10.1 to 8.4.5.4.10.15).
- IEEE std 802.16-2004/Cor2/2/D4 - Ref.[9]: "Draft standard for local and metropolitan area networks. Part 16 : Air Interface for Fixed and Mobile Broadband Wireless access Systems Corrigendum 2", May 2007. (see Ref.[9]).
- Another useful text for WiMAX is: "WiMAX Forum™ Mobile System Profile - Release 1.0 Approved Specification - (Revision 1.4.0: 2007-05-02)"; (see Tables 69 and 70).

## BACKGROUND ART

Closed loop schemes are regarded as an appealing technique for MIMO wireless systems, as they improve the reliability and throughput performance by adapting the spatial precoder according to channel conditions (*informed transmitter*) in bibliographic Reference [1].
**Fig.1** shows the general diagram of a discrete-time transmit beamforming MISO system with limited feedback by the receiver RX to the transmitter TX, as disclosed in Ref.[7]. The depicted structure is very general and is compliant with a lot of spatial multiplexing algorithms. This structure can also be extended to a MIMO system. With reference to **fig.1,** a Base Station (BS) 1 transmits, with N = 2 antennas, N = 2 signals relevant to the same user at a discrete time interval $n$ corresponding to the symbol time $T_s$ of a sample of the continuous signal. Each baseband signal is weighted (precoded) by an its own complex weight $w_n$ (precode) calculated by a processor block 2 (Beamforming Vector Generator) of BS 1. The complex weights $\mathbf{w}_n$ is a vector that spans a codebook H stored in both TX and RX.
The N = 2 streams are transmitted on the radio channel downlink to a Mobile Station 3, which receives both streams with a single antenna. The Mobile 3 evaluates the downlink channel $\mathbf{h}_n$ (a vector that collects all samples of the MISO pulse response) convoluted with the weight vector $\mathbf{w}_n$, which constitutes the Channel State Information (CSI), by any suitable optimization algorithm (e.g. ML) aimed to improve the quality of the reception at the Mobile 3 upon the knowledge of pilot tones. The CSI is forwarded to a Quantizer 4, which compresses it according to a quantization algorithm (briefly discussed soon) assuming that Mobile 3 has perfect knowledge of the forward channel (DL), and slow-rate feedback channel is considered as free of errors and delays. The CSI Quantizer 4 maps the normalized channel vector $\mathbf{u}_n = \mathbf{h}_n/\|\mathbf{h}_n\|$ (named the channel shape) onto a member of the codebook H and outputs its index $J_n$ (the CSI) to the input of a cascaded block 5. The latter, according to an aperiodic feedback scheme, initiates a feedback of the index whenever the CSI changes ($J_n \neq J_{n-1}$). The quantized index $J_n$ is fed back with lesser band consuming constraint than in absence of compression. At the transmission side the Beamforming Vector Generator 2 receives the quantized index $J_n$ from the feedback channel and uses it to address a new set of weights $\{\mathbf{w}_{n+1}\}$ at time n + 1 of the codebook H seen as a look-up table.
In Ref.[7] presently described, similarly to Ref.[5], Ref.[6], and Ref.[8] some temporal correlations in fading channel have been exploited for feedback reduction. In Ref.[5] a tracking procedure for the channel subspace based on binary feedback has been considered. In Ref.[6], Ref.[7] and Ref.[8] the time-varying quantized channel is modelled as a Markov process and feedback reduction is achieved by dropping low probability transitions. The probability of each transition is obtained by statistical training of the Markov process. Turning the attention to Ref.[7], the CSI Quantizer 4 maps the states of the channel-state Markov chain one-to-one to the members of the codebook H. This mapping also exists between the codebook members and the quantized values of the channel shape $\mathbf{u}_n$. The codebook H is designed by partitioning the channel shape space (unit hyper sphere) into *N* regions, called *Voronoi cells* in the specialized literature. Compared with the case of no feedback compression, the feedback compression method based on dropping low probability transitions incurs the additional costs of storing additional tables defining the ε-neighbourhood of the Markov state *i* as:

$$\mathrm{N}_{\varepsilon}(i) = \left\{ 1 \le j \le N \middle| P_{i,j} \ge \varepsilon \right\}, \qquad i = 1, \cdots, N$$

where ε> 0 is a small positive number.

A lot of other techniques for an efficient design of the feedback channel have been proposed in the literature in case of, e.g., beamforming Ref.[2], and spatial multiplexing Ref.[3], and Ref.[4]. However, most of these schemes are pessimistic as they assume block fading channels and thus neglect temporal channel correlation in the feedback protocol design.

## OBJECT OF THE INVENTION

In view of the state of the art described, it is an object of the present invention to provide a CSI reporting technique with reduced-bitrate which exploits the temporal correlation of the fading channel without any training of the channel model and any storage for additional tables are requested, in order to be more prone to practical implementation in wireless systems.

## SUMMARY AND ADVANTAGES OF THE INVENTION

The invention achieves said object by providing a method for quantizing dynamically the state information of a forward transmission channel sent back by a receiver to a transmitter equipped with $n_t$ antennas for transmitting $n_s$ streams on the forward channel according to a spatial multiplexing or beamforming scheme, the method including the following steps executed by the receiver at discrete time *t*+1:

- estimating a codeword $\mathbf{F}_{t+1}$ according to any suitable optimization method;
- indexing the codeword $\mathbf{F}_{t+1}$ into a reduced codebook $\Delta(\mathbf{F}_t)$ belonging to a larger codebook Φ;
- transmitting on the backward channel the state information corresponding to the index of $\mathbf{F}_{t+1}$ spanning the reduced codebook $\Delta(\mathbf{F}_t)$;
- calculating a reduced codebook $\Delta(\mathbf{F}_{t+1})$ including $2^{b_\delta}$ orthogonal codewords of Φ according to the following expression:
-

$$\Delta(\mathbf{F}_{t+1}) = \{\mathbf{F}_i\} \in \Phi : \max_{\mathbf{F}_i \in \Delta(\mathbf{F}_{t+1})} \left( d\left(\mathbf{F}_i, \mathbf{F}_{t+1}\right) \right) < \min_{\mathbf{F}_j \notin \Delta(\mathbf{F}_{t+1})} \left( d\left(\mathbf{F}_j, \mathbf{F}_{t+1}\right) \right),$$

where *i, j* are generic index spanning the elements of codebook Φ, and $d(\square)$ is the chordal distance from $\mathbf{F}_{t+1}$: and the following steps executed by the transmitter at discrete time *t*+1:

- receiving on the backward channel said index of $\mathbf{F}_{t+1}$ and using it for retrieving $\mathbf{F}_{t+1}$ from the reduced codebook $\Delta(\mathbf{F}_t)$ calculated by the transmitter at discrete time *t* ;
- multiplying the actual sample of the baseband transmission signal by the codeword $\mathbf{F}_{t+1}$ and transmitting the product on the forward channel;
- calculating a reduced codebook $\Delta(\mathbf{F}_{t+1})$ according to the same expression used by the receiver, as disclosed in claim 1.

The step of indexing the codeword $\mathbf{F}_{t+1}$ spanning $\Delta(\mathbf{F}_t)$ at the receiver is driven by one-to-one associations between the $2^{b_d}$ configurations of $b_\delta$ bits and the $2^{b_d}$ codewords of $\Delta(\mathbf{F}_t)$, said associations map the reduced address space of $\Delta(\mathbf{F}_t)$ onto the larger address space of codebook Φ seen as a look-up table. The same one-to-one associations are assumed at the transmitter for de-indexing or demapping.

The method of above is valid for MIMO and MISO systems, indifferently.

Additional features of the present invention which are believed to be novel are set forth with particularity in the dependent claims.

We remark that:

- The codeword $\mathbf{F}_t \in \mathbb{C}^{n_t \times n_s}$ is a $n_t \times n_s$ precoding matrix (or a $n_t$ vector in case of beamforming), where $\mathbb{C}^{n_t \times n_s}$ is a complex vector space.
- The codebook $\Phi$ includes $n_w = n_t \times n_s$ codewords (also termed precoders).
- The reduced codebook $\Delta(\mathbf{F}_t)$ contains $n_\delta \le n_w$ codewords that can be indexed with $b_\delta = \lceil \log_2 n_\delta \rceil^+ \le b$ bits, where $\lceil \; \rceil^+$ indicates the approximation to the nearest higher integer.
- The chordal distance $d(\mathbf{F}_i, \mathbf{F}_t) \equiv \sin(\vartheta_{ij}) = \frac{1}{\sqrt{2}} \left\| \mathbf{F}_i \mathbf{F}_t^H - \mathbf{F}_t \mathbf{F}_t^H \right\|_F$ tunes the ability of the system to track fast channel fluctuations and in the meanwhile allows feedback load reduction.

In conclusion, the main idea of the invention is that for highly correlated channels the precoder $\mathbf{F}_{t+1}$ at time $t$+1 lies in a neighbourhood of precoder $\mathbf{F}_t$ at time $t$. Therefore, quantization of $\mathbf{F}_{t+1}$ can be efficiently narrowed to the neighbourhood of $\mathbf{F}_t$.

Especially for MISO systems, the reduced codebook $\Delta(\mathbf{F}_t)$ can be modelled as a ball of radius $\delta$ centred around $\mathbf{F}_t$ and the chordal distance is the radius $\delta$ itself. In such a case the step of estimating the radius $\delta$ is performed by solving the following expression:

$$\Delta(\mathbf{F}_t, \delta) = \left\{ \{\mathbf{G}_i\} \in \Phi : V(\mathbf{G}_i) \cap \mathcal{B}(\mathbf{F}_t, \delta) \neq \varnothing \right\},$$

where:

- $\mathcal{B}(\mathbf{F}_t, \delta)$ is the aforementioned $n_t$-dimensional ball centred on $\mathbf{F}_t$,
- $\mathbf{G}_i$ is an $n_t \times n_s$ unitary matrix belonging to an $\Omega(n_t, n_s)$ vector space encompassing all $n_t \times n_s$ unitary matrices definable on the codebook $\Phi$,
- $V(\mathbf{G}_i)$ is a quantization (Voronoi) region associated to the $i_{th}$ codeword $\mathbf{G}_i \in \Phi$. Partition of a Codebook into adjacent Voronoi regions is a known concept.

In the next description the radius $\delta$ will be calculated in closed form; alternatively, an upper bound will be provided. Profitably:

- The method of the invention is independent of the role that a transmitting/receiving entity plays in the network, since either the Base Station (BS) or the Mobile Station (MS) could play the role of transmitting entity on the forward channel, with the only constraint that the MS be able to transmit with $n_t$ antennas.
- The method of the invention is independent of the number of transmitting antennas, and either a single or multiple antenna is possible at the receiver which estimates the CSI.
- The method of the invention is independent of the type of adopted spatial multiplexing scheme; for example, according to a beamforming scheme with $n_s$ =1, only one stream is transmitted by every antenna.
- Differently from literature, the method does not require any training of the channel model and is therefore more prone to practical implementation in wireless systems.
- Furthermore, no specific assumptions about channel statistics and codebook properties have been taken.
- With correlated time-varying channels the method allows a reduction of the feedback load with negligible loss of performance.

According to a variant of the invention, the number $b_\delta$ of bits used to express the cardinality of $\Delta(\mathbf{F}_t)$ (or the value of radius $\delta$), instead of being evaluated at each time slot, is assumed in suboptimal way as being lower than, or equal to, the bitrate currently available on the backward channel multiplied by the symbol time of the modulated transmission signal. The available bitrate can be communicated by the transmitting entity to the receiving entity each time it is changed, but this event happens at very slow time-interval in respect of symbol-time, so that the traffic of payload on the forward channel is not affected by these types of dedicated messages, significantly. The variant prevents the estimation of radius $\delta$ analytically but it is less reliable in the fast tracking of channel fading.

## BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:

- **fig.1** shows the general diagram of a beamforming system with limited feedback operating according to a method of the known art;
- **fig.2** shows the general diagram of a beamforming system with limited feedback operating according to the method of the present invention;
- **figg.3** and **4** show some vectorial representations referred to the quantization regions and correlated channel useful to understand the method of the invention;
- **fig.5** shows a double family of comparative curves between simulated CCDF and an approximate closed form expression use in the calculation, encompassing different normalized Doppler frequency values taken as a variable parameter;
- **figg.6, 7** and **8** show different sets of curves reporting the numerical results of some comparative simulations between the quantization of the CSI according to known method and the method of the invention.

## DETAILED DESCRIPTION OF SOME EMBODIMENTS OF THE INVENTION

In **fig.1** we see a closed loop MIMO wireless system consisting of a transmitter 6 equipped with $n_t$ transmit antennas and a receiver 7 equipped with $n_r$ receive antennas on the forward link. The forward channel $\mathbf{H}_t$ at time slot $t$ is modelled as a Rayleigh distributed $n_r \times n_t$ matrix having i.i.d. entries:

$$vec\left(\mathbf{H}_t\right) \sim \mathcal{CN}\left(\mathbf{0}_{n_r n_t \times 1}, \mathbf{I}_{n_r n_t}\right) \qquad (1)$$

and is arbitrarily correlated among different time slots. The receiver 7 is connected to the transmitter 6 through a reverse channel for user traffic (not shown) and through an additional low-rate (in-band) feedback channel. Without losing of generality, the feedback channel is supposed zero-delay and ideal. The transmitter 6 has $n_t$ inputs for a vector $\mathbf{s}_t \in \square^{n_s \times 1}$ that contains the modulated symbols for each independent data stream such that $E\left[\mathbf{s}_t \mathbf{s}_t^H\right] = \mathbf{I}_{n_s}$.

The transmitter 6 multiplexes $n_s \leq \min\{n_r, n_t\}$ streams during every time slot $t$ of the wireless channel by spatial multiplexing, see Ref.[1] or even IEEE 802.16e-2005, entry 8.4.8.3.6 (MIMO precoding matrix $W$). This includes beamforming by trivially setting $n_s = 1$. The system transfer function at time slot $t$ on the forward link is modelled as:

$$\mathbf{y}_t = \mathbf{H}_t \mathbf{F}_t \mathbf{s}_t + \mathbf{n}_t \ . \qquad (2)$$

Here $\mathbf{y}_t \in \square^{n_r \times 1}$ is the received signal, $\mathbf{n}_t \sim CN(\mathbf{0}_{n_r \times 1}, \sigma^2 \mathbf{I}_{n_r})$ is the Gaussian i.i.d. additive noise and $\mathbf{F}_t \in \square^{n_t \times n_s}$ is the precoding matrix (or vector in case of beamforming). According to current assumptions in wireless standard Ref.[9], the energy is equally split among the $n_s$ orthogonal streams ($\mathbf{F}_t^H \mathbf{F}_t = \mathbf{I}_{ns}$) such that $\mathbf{F}_t$ spans $n_s$ dimensions over the $n_t$ dimensional space.

The precoder $\mathbf{F}_t$ is dynamically adapted to channel conditions at time $t$+1 according to quantized CSI conveyed by the receiver 7 to transmitter 6 on the feedback channel (supposed ideal with zero-delay). In detail, at each time slot $t$+1 the following operations are executed:

1. the receiver 7, according to any suitable optimization criterion known in the art, e.g. ML, chooses the optimal precoder $\mathbf{F}_{t+1}$ from a subset $\Delta(\mathbf{F}_t)$ of a pre-defined codebook $\Phi$ including $n_w$ codewords (precoders);
2. the receiver feeds back on the low-rate channel the index of precoder $\mathbf{F}_{t+1}$ spanning the reduced codebook $\Delta(\mathbf{F}_t)$;
3. the receiver calculates a reduced codebook $\Delta(\mathbf{F}_{t+1})$ including $2^{b_\delta}$ orthogonal codewords of $\Phi$, according to the following expression:

$$\Delta(\mathbf{F}_{t+1}) = \{\mathbf{F}_i\} \in \Phi : \max_{\mathbf{F}_i \in \Delta(\mathbf{F}_{t+1})} \left(d(\mathbf{F}_i, \mathbf{F}_{t+1})\right) < \min_{\mathbf{F}_j \notin \Delta(\mathbf{F}_{t+1})} \left(d(\mathbf{F}_j, \mathbf{F}_{t+1})\right),$$

where *i, j* are generic index spanning the elements of codebook $\Phi$, and $d(\mathbf{F}_i, \mathbf{F}_{t+1})$ is the chordal distance from $\mathbf{F}_{t+1}$;
4. the transmitter receives the quantized index and uses it to retrieve the precoder $\mathbf{F}_{t+1}$ from subset $\Delta(\mathbf{F}_t)$ in correspondence of that index;
5. the transmitter multiply the actual baseband sample by precoder $\mathbf{F}_{t+1}$ and transmit the product;
6. The transmitter calculate a reduced codebook $\Delta(\mathbf{F}_{t+1})$ as done in the receiver.

Some definitions are introduced here to give support to the reduced codebook determination:

- Let $\Omega(n_t,n_s)$ be the set of all $n_t \times n_s$ unitary matrices. The chordal distance between two subspaces generating unitary matrices $\mathbf{G}_i \in \Omega(n_t,n_s)$ and $\mathbf{G}_j \in \Omega(n_t,n_s)$ (i.e., matrices whose columns spaces span $n_s$ dimensions over the available $n_t$ dimensions) is defined as:

$$d(\mathbf{G}_i, \mathbf{G}_j) \equiv \sin(\vartheta_{ij}) = \frac{1}{\sqrt{2}} \left\| \mathbf{G}_i \mathbf{G}_i^H - \mathbf{G}_j \mathbf{G}_j^H \right\|_F, \quad (3)$$

where $\vartheta_{i,j} \in [0,\pi/2]$ is the angle between $\mathbf{G}_i$ and $\mathbf{G}_j$, and $\|\Box\|_F$ is the Frobenius norm.
- The quantization (Voronoi) region associated to the $i_{th}$ codeword $\mathbf{G}_i \in \Phi$ is defined as

$$V(\mathbf{G}_i) = \left\{ \{\mathbf{X}\} \in \Omega(n_t, n_s) : d(\mathbf{G}_i, \mathbf{X}) < d(\mathbf{G}_j, \mathbf{X}) \; \forall j \neq i \right\}, \quad (4)$$

- A ball $B(\mathbf{G}_i,\delta)$ of radius $\delta$ centred on $\mathbf{G}_i \in \Omega(n_t,n_s)$ is defined as the subset of all matrices belonging to $\Omega(n_t,n_s)$ within a given distance $\delta$ from $\mathbf{G}_i$, Ref.[2]:

$$\mathcal{B}(\mathbf{G}_i, \delta) = \left\{ \{\mathbf{X}\} \in \Omega(n_t \times n_s) : d(\mathbf{G}_i, \mathbf{X}) < \delta \right\}. \quad (5)$$

It is now better understandable the analytic expression:

$$\Delta(\mathbf{F}_t, \delta) = \left\{ \{\mathbf{G}_i\} \in \Phi : V(\mathbf{G}_i) \cap \mathcal{B}(\mathbf{F}_t, \delta) \neq \varnothing \right\} \quad (6)$$

given before for the reduced codebook with spherical constraint.

**Mathematical evaluation of CSI quantization**

In the successive description the nearly-optimal feedback load is evaluated for the closed loop system based on a feedback reduction procedure as said above. A nearly optimal value for distance $\delta$ to be used in (6) is evaluated according to the temporal channel correlation. A closed-form upper bound on the corresponding feedback load is obtained by estimating the average cardinality of $\Delta(\mathbf{F}_t,\delta)$.

For simplicity, in the following a MISO system employing Maximum Ratio Transmission (MRT) is considered such that the unquantized $(n_t \times 1)$ precoder at time $t$ is $\bar{\mathbf{h}}_t = \mathbf{h}_t^H / \|\mathbf{h}_t\|$. It is assumed that $\bar{\mathbf{h}}_t$ is mapped on $\mathbf{F}_t \in \Phi$ as:

$$\mathbf{F}_t = \left\{ \mathbf{G}_i \in \Phi : d\left(\mathbf{G}_i, \bar{\mathbf{h}}_t\right) < d\left(\mathbf{G}_j, \bar{\mathbf{h}}_t\right) \forall \mathbf{G}_j \in \Phi, j \neq i \right\} \qquad (7)$$

The optimal reduced codebook $\Delta(\mathbf{F}_t)$ is defined as:

$$\Delta\left(\mathbf{F}_t, \delta_0\right) = \left\{ \left\{ \mathbf{G}_i \right\} \in \Phi : V\left(\mathbf{G}_i\right) \cap \mathcal{B}\left(\mathbf{F}_t, \delta_0\right) \neq \varnothing \right\} \qquad (8)$$

such that:

$$\Pr\left(\mathbf{F}_{t+1} \notin \Delta\left(\mathbf{F}_t, \delta_0\right)\right) = \varepsilon \qquad (9)$$

where $\varepsilon$ is an arbitrary threshold ($0 \leq \varepsilon \leq 1$). According to (8), $\delta_0$ is the minimum distance such that the probability that the precoder $\mathbf{F}_{t+1}$ at time $t$+1 lies outside a ball of radius $\delta_0$ centered on $\mathbf{F}_t$ is $\varepsilon$. Condition (9) can be equivalently expressed as:

$$\Pr\left(d\left(\mathbf{F}_t, \bar{\mathbf{h}}_{t+1}\right) \geq \delta_0\right) = \varepsilon \ . \qquad (10)$$

The analytical solution of (10) is not practical as it is based on specific assumptions on the shape of the Voronoi region $V(\mathbf{F}_t)$. Therefore, in the following a general upper bound on $\delta_0$ is derived by avoiding any assumption on the Voronoi region shape. With reference to **fig.3,** it can be shown that:

$$d\left(\mathbf{F}_t, \bar{\mathbf{h}}_{t+1}\right) \leq d\left(\mathbf{F}_t, \bar{\mathbf{h}}_t\right) + d\left(\bar{\mathbf{h}}_t, \bar{\mathbf{h}}_{t+1}\right) \leq d_{\mathrm{m}} + d\left(\bar{\mathbf{h}}_t, \bar{\mathbf{h}}_{t+1}\right) \qquad (11)$$

where $d_{\mathrm{m}}$ is the maximum quantization error distance for any Voronoi region of codebook $\Phi$:

$$d_{\mathrm{m}} = \left\{ \min(\lambda) : \lambda \geq d\left(\mathbf{G}_j, \mathbf{x}\right), \forall \mathbf{x} \in V\left(\mathbf{G}_j\right), \forall \mathbf{G}_j \in \Phi \right\}. \qquad (12)$$

The maximum quantization error length $d_{\mathrm{m}}$ is a specific property of the codebook and has to be evaluated numerically. However, in case $\Phi$ is the optimal codebook based on Grassmannian manifold Ref.[10], a simple tight bound on $d_{\mathrm{m}}$ is given by the following Rankin bound given in Ref.[11]:

$$d_{\mathrm{m}} \leq \sqrt{\frac{\left(n_t - 1\right) n_w}{n_t \left(n_w - 1\right)}} \qquad (13)$$

According to (11) and (10), the following relationship holds for any $\delta_0^{'} \geq d_m$:

$$\Pr\left(d\left(\overline{\mathbf{h}}_t,\overline{\mathbf{h}}_{t+1}\right) \geq \delta_0^{'} - d_m\right) = \Pr\left(d\left(\overline{\mathbf{h}}_t,\overline{\mathbf{h}}_{t+1}\right) + d_m \geq \delta_0^{'}\right) \quad (14)$$

$$\rightarrow \Pr\left(d\left(\mathbf{F}_t,\overline{\mathbf{h}}_{t+1}\right) \geq \delta_0^{'}\right) \leq \varepsilon \quad (15)$$

Eq. (15) shows that an upper bound $\delta_0^{'} \geq \delta_0$ to be used for the optimization of (6) is obtained by solving the (14) for $\delta_0^{'}$:

$$\delta_0^{'} = \left\{\lambda : \Pr\left(d\left(\overline{\mathbf{h}}_t,\overline{\mathbf{h}}_{t+1}\right) \geq \lambda - d_m\right) = \varepsilon\right\} = \overline{F}^{-1}_{d\left(\overline{\mathbf{h}}_t,\overline{\mathbf{h}}_{t+1}\right)}\left(\varepsilon\right), \quad (16)$$

where $\overline{F}^{-1}_{d\left(\overline{\mathbf{h}}_t,\overline{\mathbf{h}}_{t+1}\right)}\left(\square\right)$ is the inverse of the CCDF (Complementary CDF) of $d\,(\overline{\mathbf{h}}_t,\overline{\mathbf{h}}_{t+1})$. The following is the analytical expression of a closed form for $\overline{F}_{d(\overline{\mathbf{h}}t,\overline{\mathbf{h}}_{t+1})}(\square)$ to be used in (16), that will be derived later in the description:

$$\overline{F}_{d\left(\overline{\mathbf{h}}_t,\overline{\mathbf{h}}_{t+1}\right)}\left(\delta\right) \equiv \Pr\left(d\left(\overline{\mathbf{h}}_t,\overline{\mathbf{h}}_{t+1}\right) > \delta\right) =$$

$$= \frac{\left(2n_t - 2\right)!}{\Gamma\left(n_t\right)\Gamma\left(n_t - 1\right)} \sum_{k=0}^{n_t-2} \left(-1\right)^k \binom{n_t - 2}{k} \frac{\left(\dfrac{\tan^2\delta}{1-\left|\rho\right|^2} + 1\right)^{-n_t-k}}{n_t + k} \quad (17)$$

A closed-form upper bound on the reduced codebook $\Delta\left(\mathbf{F}_t, \delta_0^{'}\right)$ size is derived in the following according to the optimal reduced codebook (8) and the approximate quantization ball radius $\delta_0^{'}$ given by (16). By recalling that $d(\mathbf{F}_i,\overline{\mathbf{h}}_i) \leq d_m$ it holds (see **fig.3** for visual reference):

$$d\left(\mathbf{F}_t,\mathbf{F}_{t+1}\right) \leq d\left(\mathbf{F}_t,\overline{\mathbf{h}}_t\right) + d\left(\overline{\mathbf{h}}_t,\overline{\mathbf{h}}_{t+1}\right) + d\left(\overline{\mathbf{h}}_{t+1},\mathbf{F}_{t+1}\right) \quad (18)$$

$$d\left(\mathbf{F}_t,\mathbf{F}_{t+1}\right) \leq 2d_{\mathrm{m}} + d\left(\overline{\mathbf{h}}_t,\overline{\mathbf{h}}_{t+1}\right) = \delta_0^{'} + d_m, \quad (19)$$

where (11) has been plugged into (18) in the last passage.

Let $A(\mathbf{F}_i,\delta)$ be the surface on the $n_t$ -dimensional unit sphere that is included in ball of radius δ centered in $\mathbf{F}_i$. It is shown in Ref.[2] that the ratio between $A(\mathbf{F}_i,\delta)$ and the total surface of the unit sphere is:

$$\frac{A(\mathbf{F}_i,\delta)}{A_{tot}} = \delta^{2(n_t-1)}. \tag{20}$$

Assuming that the codewords are uniformly distributed on the unit sphere, the average number of codewords covered by $A(\mathbf{F}_i,\delta)$ is:

$$\left|\Delta(\mathbf{F}_t,\delta)\right| = \delta^{2(n_t-1)} n_w, \tag{21}$$

where $|\Delta(\mathbf{F}_t,\delta)|$ is the cardinality of the reduced codebook. Therefore, an upper bound on the codebook (8) size is:

$$\left|\Delta(\mathbf{F}_t,\delta)\right| \le \left(\delta_0^{'} + 2d_m\right)^{2(n_t-1)} n_w, \tag{22}$$

where $\delta_0^{'}$ is the upper bound on $\delta_0$ in (8) given by (16). As a general rule bounds (16) and (21) are tight for $d_m \to 0$, i.e., when the granularity of quantization regions is low. On the other hand, bound (22) may be loose for moderately dense codebooks and a tighter approximation is given by:

$$\left|\Delta(\mathbf{F}_t,\delta)\right| \le \left(\delta_0^{'} + 2\overline{\delta}\right)^{2(n_t-1)} n_w, \tag{23}$$

where $\overline{\delta}$ is the average quantization error length.

Here a closed form expression for $\Pr(d(\overline{\mathbf{h}}_t,\overline{\mathbf{h}}_{t+1})>\delta) \equiv \overline{F}_{d(\overline{\mathbf{h}}_t,\overline{\mathbf{h}}_{t+1})}(\delta)$ to be numerically inverted and plugged into (16) is derived. The time-varying MISO channel is modeled as an autoregressive AR(1) process commonly accepted as wireless channel model:

$$\mathbf{h}_{t+1} = \rho\mathbf{h}_t + \mathbf{w}_{t+1}, \tag{24}$$

where

$$\mathbf{w}_{t+1}^T \sim \mathcal{CN}(\mathbf{0}_{n_t\times 1}, (1-\rho^2)\mathbf{I}_{n_t})$$

is the Gaussian innovation and $\rho \in \Re$ is the correlation factor ($0 \le \rho \le 1$). Assuming Clarke's channel model, ρ is related to the normalized channel Doppler frequency as:

$$\rho = J_0(2\pi\psi), \tag{25}$$

where $J_0$ is the even Bessel function of zero order.

With reference to **fig.4**, let $\mathbf{w}_{t+1}^{\parallel}$ be the projection of $\mathbf{w}_{t+1}$ on $\mathbf{h}_t$ and let $\mathbf{w}_{t+1}^{\perp}$ be the projection of $\mathbf{w}_{t+1}$ on the null space of $\mathbf{h}_t$:

$$\mathbf{w}_{t+1}^{\parallel} = \left(\mathbf{h}_t^H \mathbf{h}_t / \mathbf{h}_t \mathbf{h}_t^H\right) \mathbf{w}_{t+1} \tag{26-A}$$

$$\mathbf{w}_{t+1}^{\perp} = \left(\mathbf{I} - \mathbf{h}_t^H \mathbf{h}_t / \mathbf{h}_t \mathbf{h}_t^H\right) \mathbf{w}_{t+1}. \tag{26-B}$$

In the considered setting, according to Ref.[2], the Eq. (3) reduces to:

$$d\left(\bar{\mathbf{h}}_t, \bar{\mathbf{h}}_{t+1}\right) \equiv \sin\left(\vartheta_{t,t+1}\right) = \tan^{-1}\left(\left\|\mathbf{w}_{t+1}^{\perp}\right\| / \left\|\mathbf{h}_t + \mathbf{w}_{t+1}^{\parallel}\right\|\right). \tag{27}$$

The distribution of $d(\bar{\mathbf{h}}_t, \bar{\mathbf{h}}_{t+1})$ is obtained directly from (27), however its expression is not suitable for practical usage in real-time systems. Therefore, in the following an approximate expression for $\bar{F}_{d(\bar{\mathbf{h}}t, \bar{\mathbf{h}}_{t+1})}(\delta)$ that is tight for highly correlated channels ($\rho \rightarrow 1$) is derived.

It is first observed that for $\rho \rightarrow 1$ $\left\|\mathbf{h}_t + \mathbf{w}_{t+1}^{\parallel}\right\| \rightarrow \left\|\mathbf{h}_t\right\|$ with high probability. Therefore, Eq. (27) is approximate as:

$$d\left(\bar{\mathbf{h}}_t, \bar{\mathbf{h}}_{t+1}\right) \cong \tan^{-1}\left(\left\|\mathbf{w}_{t+1}^{\perp}\right\| / \left\|\mathbf{h}_t\right\|\right) = \tan^{-1}\sqrt{\left\|\mathbf{w}_{t+1}^{\perp}\right\|^2 / \left\|\mathbf{h}_t\right\|^2}. \tag{28}$$

Since $\mathbf{h}_t$ is a Gaussian vector of i.i.d. elements, $\|\mathbf{h}_t\|^2$ is a scaled $\chi$-squared random variable with $2n_t$ degrees of freedom and average value $n_t$,

$$\Pr_{\|\mathbf{h}_t\|^2}(x) = \frac{(2x)^{N-1}\exp(-x)}{\Gamma(n_t)2^{n_t-1}} \tag{29}$$

in which $\Gamma(n_t)$ is any algebraic function.

On the other hand, it can be shown that $\left\|\mathbf{w}_{t+1}^{\perp}\right\|^2$ is distributed as a $\chi$-squared random variable with $2n_t$ - 2 degrees of freedom scaled by $\lambda = 1 - \rho^2$:

$$\Pr_{\|\mathbf{w}_{t+1}^{\perp}\|^2}(y) = \frac{\left(\frac{2}{\lambda}y\right)^{N-2}\exp(-y/\lambda)}{\lambda\Gamma(n_t-1)2^{n_t-2}} \tag{30}$$

The p.d.f. of $z = \left\|\mathbf{w}_{t+1}^{\perp}\right\|^2 / \left\|\mathbf{h}_t\right\|^2$ is derived from (29) and (30):

$$\Pr_z(\gamma) = \frac{(2n_t - 2)!}{\Gamma(n_t)\Gamma(n_t - 1)\lambda^{n_t - 1}} \gamma^{n_t - 2} (\gamma/\lambda + 1)^{-2n_t + 1} \quad (31)$$

The CCDF $\overline{F}_{d(\overline{\mathbf{h}}_t,\overline{\mathbf{h}}_{t+1})}(\delta)$ of $d(\overline{\mathbf{h}}_t,\overline{\mathbf{h}}_{t+1})$ is finally obtained by integrating (31) and substituting $z = \tan^2 \delta$.

**Fig.5** shows the comparison between the (17) and the numerical CCDF of $d(\overline{\mathbf{h}}_t,\overline{\mathbf{h}}_{t+1})$ in (27) for $n_t = 4$ and for various values of $\rho$ expressed as in Eq. (25). As expected, the (17) is tight for $\rho \to 1$, which is the setting of most practical interest for the feedback compression technique previously discussed.

Now with reference to the remaining **figg.6, 7,** and **8,** the proposed feedback reduction algorithm is evaluated in terms of average rate performance for various codebook design criteria and system parameters. The channel at generic time slot *t* is distributed according to (1) and channel correlation is modeled by the AR(1) model (24). The average rate is evaluated according to Shannon's capacity:

$$\overline{R} = E[R_t] = E\left[\log_2 \det\left(\mathbf{I} + \mathbf{H}_t \mathbf{F}_t \mathbf{F}_t^H \mathbf{H}_t^H / \sigma^2\right)\right] \quad (32)$$

as a function of the normalized Doppler frequency $\psi$ in (24). The feedback channel is assumed as error-free and zero-delay.

The following feedback schemes are evaluated:

- Analog feedback (solid line): the optimal unquantized precoder $\overline{\mathbf{h}}_t = \mathbf{h}_t^H / \left\|\mathbf{h}_t\right\|$ is used at each time-slot *t*.
- Conventional quantized feedback ("x" marker): an independent feedback of $b = \lceil \log_2 n_w \rceil^+ = 6$ bits is sent on a time-slot basis.
- Reduced quantized feedback (dashed lines): the reduced feedback technique of the method of the invention is assumed and the reduced codebook includes the $2^{b'}$ nearest neighbors of $\mathbf{F}_t$. The feedback load is independent on Doppler frequency.
- Reduced quantized feedback ("o" marker): the reduced feedback technique of the method of the invention is assumed, and the feedback load is dynamically adjusted to channel normalized Doppler frequency. The actual feedback load is function of channel correlation according to (16).

**Fig.6** shows the performance for a MISO system with $n_t = 4$ transmit antennas and average $SNR = 1/\sigma^2 = 20dB$.

Codebook $\Phi$ is taken from the Grassmannian manifold $\mathcal{G}(4,1,64)$, see Ref.[2]. The proposed feedback load estimation criterion (16) proves to be able to efficiently tune the feedback load according to channel correlation.

**Fig.7** shows the average rate for a MISO system with $n_t = 8$ transmit antennas and $SNR = 20dB$. A random codebook $\Phi$ with 1024 codewords leading to an uncompressed feedback load of $b = \lceil \log_2 n_w \rceil^+ = 10$ bit/time-slot is assumed. The efficiency of the feedback load estimator (16) is confirmed in this case, too.

**Fig.8** shows the normalized feedback load *f*: i.e. the ratio between the reduced feedback load (8) and the uncompressed feedback load:

$$f = \left\lceil \log_2 \left|\Delta\left(\mathbf{F}_t, \delta_0'\right)\right| \right\rceil^+ / \left\lceil \log_2 n_w \right\rceil^+ \quad (33)$$

The simulation shows that significant feedback reduction can be achieved for highly correlated channels and that the margin for feedback reduction increases with the density of the codebook.

Although the invention has been described with particular reference to a preferred embodiment, it will be evident to those skilled in the art, that the present invention is not limited thereto, but further variations and modifications may be applied without departing from the scope of the invention as defined by the annexed claims.

## USED ACRONYMS

| | |
|---|---|
| 3GPP | 3rd Generation Partnership Program |
| ARn | AutoRegressive-n |
| ARMAn | AutoRegressive Moving Average-n |
| BS | Base Station |
| CCDF | Complementary Cumulative Distribution Function |
| $CN(0,\sigma)$ | Complex Normal (mean, standard deviation) |
| CSI | Channel State Information |
| DL | Downlink |
| EGPRS | Enhanced GPRS |
| ETSI | European Telecommunications Standards Institute |
| FDD | Frequency Division Duplexing |
| GERAN | GSM EDGE Radio Access Network |
| GPRS | General Packet Radio Service |
| GSM | Global System for Mobile communications |
| IEEE | Institute of Electrical and Electronics Engineers |
| HSDPA | High Speed Downlink Packet Access |
| HSUPA | High Speed Uplink Packet Access |
| i.i.d. | independent identically distributed |
| LTE | Long Term Evolution |
| MIMO | Multiple Input Multiple Output |
| ML | Maximum Likelihood |
| MRT | Maximum Ratio Transmission |
| OFDM | Orthogonal Frequency Division Multiplexing |
| OFDMA | Orthogonal Frequency Division Multiplex Access |
| PCS | Personal Communication System |
| p.d.f. | probability distribution function |
| QoS | Quality of Service |
| SIMO | Single Input Multiple Output |
| SINR | Signal to Interference and Noise Ratio |
| SNR | Signal to Noise Ratio |
| TDD | Time Division Duplexing |
| TDMA | Time Division Multiple Access |
| UE | User Equipment |
| UL | Uplink |
| UMB | Ultra Mobile Broadband |
| UMTS | Universal Mobile Telecommunication System |
| UPE | User Plane Entity |
| UTRAN | Universal Terrestrial Radio Access Network |
| WCDMA | Wideband Code Division Multiple Access |
| WiMAX | Worldwide Interoperability for Microwave Access |
| WLAN | Wireless Local Area Network |
| AWGN | Additive White Gaussian Noise |

## REFERENCES

[1] A. Paulraj, R. Nabar and D. Gore. Introduction to Space-Time Wireless Communications, Cambridge Univ. Press, May 2003.

[2] D. J. Love, R. H. Heath, T. Strohmer, "Grassmannian Beamforming for Multiple-Input Multiple-Output Wireless Systems", IEEE Trans. on Inf. Theory, vol. 49, pp. 2735- 2747, Oct. 2003

[3] D. J. Love, R. H. Heath, "Limited Feedback Unitary Precoding for Spatial Multiplexing Systems", IEEE Trans. on Inf. Theory, vol. 51, pp. 2967-2976, Aug. 2005.

[4] N. Jindal, "MIMO Broadcast Channels with Finite Rate Feedback", IEEE Trans. on Inf. Theory, Vol. 52, pp 5045-5060, Nov. 2006.

[5] B. C. Banister and J. R. Zeidler, "Feedback assisted stochastic gradient adaptation of multiantenna transmission," IEEE Trans. on Wireless Commun., vol. 4, no. 3, pp. 1121-1135, 2005.

[6] C. Simon; G. Leus , "Feedback reduction for spatial multiplexing with linear precoding", in Proc. IEEE ICASSP, April 2007.

[7] K. Huang, B. Mondal, R. W. Heath, J. G. Andrews, "Multi-Antenna Limited Feedback for Temporally-Correlated Channels: Feedback Compression", in Proc. Of IEEE Globecom, 2006.

[8] K.-B. Huang, B. Mondal, R. W. Heath, Jr., and J. G. Andrews, "Mutli-antenna limited feedback systems for temporallycorrelated channels: Feedback rate and effect of feedback delay", submitted to IEEE Trans. on Inf. Theory, Mar., 2006.

[9] IEEE 802.16-2004/Cor2/D4, "Draft standard for local and metropolitan area networks. Part 16: Air Interface for Fixed and Mobile Broadband Wireless Access Systems Corrigendum 2", May 2007.

[10] A. Barg and D. Y. Nogin, "Bounds on packings of spheres in the Grassmann manifold," IEEE Trans. on Inf. Theory, vol. 48, pp. 2450-2454, Sept. 2002.

[11] J. H. Conway, R. H. Hardin, and N. J. A. Sloane, "Packing lines, planes, etc.: Packings in Grassmannian spaces," Exper. Math., vol. 5, no. 2, pp. 139-159, 1996.

## Claims

**1.** Method for quantizing dynamically the state information of a forward transmission channel sent back by a receiver (7) to a transmitter (6) equipped with $n_t$ antennas for transmitting $n_s$ streams on the forward channel according to a spatial multiplexing or beamforming scheme, **characterized in that** includes the following steps executed by the receiver (7) at discrete time $t$+1:

- estimating a codeword $\mathbf{F}_{t+1}$ according to any suitable optimization method;
- indexing the codeword $\mathbf{F}_{t+1}$ into a reduced codebook $\Delta(\mathbf{F}_t)$ belonging to a larger codebook $\Phi$;
- transmitting on the backward channel the state information corresponding to the index of $\mathbf{F}_{t+1}$ spanning the reduced codebook $\Delta(\mathbf{F}_t)$;
- calculating a reduced codebook $\Delta(\mathbf{F}_{t+1})$ including $2^{b_\delta}$ orthogonal codewords of $\Phi$ according to the following expression:

$$\Delta\left(\mathbf{F}_{t+1}\right)=\left\{\mathbf{F}_i\right\}\in\Phi:\max_{\mathbf{F}_i\in\Delta\left(\mathbf{F}_{t+1}\right)}\left(d\left(\mathbf{F}_i,\mathbf{F}_{t+1}\right)\right)<\min_{\mathbf{F}_j\notin\Delta\left(\mathbf{F}_{t+1}\right)}\left(d\left(\mathbf{F}_j,\mathbf{F}_{t+1}\right)\right),$$

where $i$, $j$ are generic index spanning the elements of codebook $\Phi$, and $d(\square)$ is the chordal distance from $\mathbf{F}_{t+1}$: and the following steps executed by the transmitter (6) at discrete time $t$+1:

- receiving on the backward channel said index of $\mathbf{F}_{t+1}$ and using it for retrieving $\mathbf{F}_{t+1}$ from the reduced codebook $\Delta(\mathbf{F}_t)$ calculated by the transmitter at discrete time $t$ ;
- multiplying, the actual sample of the baseband transmission signal by the codeword $\mathbf{F}_{t+1}$ and transmitting the product on the forward channel;

- calculating a reduced codebook $\Delta(\mathbf{F}_{t+1})$ according to the same expression used by the receiver (7).

**2.** The method of claim 1, **characterized in that** said chordal distance is expressed as:

$$d(\mathbf{F}_i,\mathbf{F}_t) \equiv \sin(\vartheta_{ij}) = \frac{1}{\sqrt{2}}\left\|\mathbf{F}_i\mathbf{F}_t^H - \mathbf{F}_t\mathbf{F}_t^H\right\|_F .$$

**3.** The method of claim 1 or 2, **characterized in that** the step at the receiver of indexing said codeword $\mathbf{F}_{t+1}$ spanning $\Delta(\mathbf{F}_t)$ is driven by one-to-one associations between the $2^{b_d}$ configurations of $b_\delta$ bits and the $2^{b_d}$ codewords of $\Delta(\mathbf{F}_t)$, said associations map the reduced address space of $\Delta(\mathbf{F}_t)$ onto the larger address space of codebook $\Phi$ seen as a look-up table.

**4.** The method of claim 3, **characterized in that** the step at the transmitter of retrieving $\mathbf{F}_{t+1}$ from the reduced codebook $\Delta(\mathbf{F}_t)$ uses the same one-to-one associations as in the receiver.

**5.** The method of any claim from 1 to 4, **characterized in that** an optimal reduced codebook is defined as:

$$\Delta(\mathbf{F}_t,\delta_0) = \left\{\{\mathbf{G}_i\} \in \Phi : V(\mathbf{G}_i) \cap \mathcal{B}(\mathbf{F}_t,\delta_0) \neq \varnothing\right\},$$

such that: $\Pr(\mathbf{F}_{t+1} \notin \Delta(\mathbf{F}_t,\delta_0))=\varepsilon$, where :

- $\Pr(\square)$ is the probability,
- $\varepsilon$ is an arbitrary threshold ($0\leq\varepsilon\leq1$),
- $\delta_0\leq\delta$ is the minimum distance such that the probability that the codeword $\mathbf{F}_{t+1}$ at time $t$ +1 lies outside a $n_t$-dimensional ball $B(\mathbf{F}_t,\delta_0)$ of radius $\delta_0$ centred on $\mathbf{F}_t$ is $\varepsilon$,
- $\mathbf{G}_i$ is a $n_t\times n_s$ unitary matrix belonging to an $\Omega(n_t,n_s)$ vector space encompassing all $n_t\times n_s$ unitary matrices definable on the codebook $\Phi$,
- $V(\mathbf{G}_i)$ is a quantization region, called Voronoi region, associated to the $i_{th}$ codeword $\mathbf{G}_i \in \Phi$.

**6.** The method of claim 5, **characterized in that** an upper bound $\delta_0^{'} \geq \delta_0$ of radius $\delta$ is expressed by the inverse of the complementary cumulative distribution function of the distances $d(\overline{\mathbf{h}}_t,\overline{\mathbf{h}}_{t+1})$ between $\overline{\mathbf{h}}_t,\overline{\mathbf{h}}_{t+1}$, where:

- vectors $\overline{\mathbf{h}}_t,\overline{\mathbf{h}}_{t+1}$ collect the samples of pulse response of forward channel at discrete times $t$ and $t$+1,
- $\delta_0^{'} \geq d_m$ is a generic value of radius $\delta$, and
- $d_m$ the maximum quantization error length specific of codebook $\Phi$.

**7.** The method of claim 6, **characterized in that** aassuming that codewords $\mathbf{F}_i$ are uniformly distributed on an unit sphere, than an upper bound on the size of reduced codebook is:

$$\left|\Delta(\mathbf{F}_t,\delta)\right| \leq \left(\delta_0^{'} + 2d_m\right)^{2(n_t-1)} n_w .$$

**8.** The method of claim 7, **characterized in that** for moderately dense codebooks $\Phi$ a tighter approximation of said upper bound is given by: $\left|\Delta(\mathbf{F}_t,\delta)\right| \leq \left(\delta_0^{'} + 2\overline{\delta}\right)^{2(n_t-1)} n_w$, where $\overline{\delta}$ is the average quantization error length.

**9.** The method of claim 6, **characterized in that** an analytical expression of said complementary cumulative distribution function to be inverted for obtaining the radius δ is:

$$\bar{F}_{d(\bar{\mathbf{h}}_t,\bar{\mathbf{h}}_{t+1})}(\delta) \equiv \Pr\left(d\left(\bar{\mathbf{h}}_t,\bar{\mathbf{h}}_{t+1}\right) > \delta\right) =$$

$$= \frac{(2n_t-2)!}{\Gamma(n_t)\Gamma(n_t-1)} \sum_{k=0}^{n_t-2} (-1)^k \binom{n_t-2}{k} \frac{\left(\frac{\tan^2\delta}{1-|\rho|^2}+1\right)^{-n_t-k}}{n_t+k},$$

where $\rho \in \Re$ is a correlation factor ($0 \le \rho \le 1$) related to the normalized channel Doppler frequency, and $\Gamma(n_t)$ is any algebraic function.

**10.** The method of claim 1, **characterized in that** said number $b_\delta$ of bits is set in suboptimal way as being lower than, or equal to, the bitrate currently available on the backward channel multiplied by the symbol time of the modulated transmission signal.

**11.** The method of claim 9, **characterized in that** said available bitrate is communicated by the transmitting entity to the receiving entity each time it is changed.

FIG 1

Discrete-time transmit beamforming system limited feedback
KNOWN ART

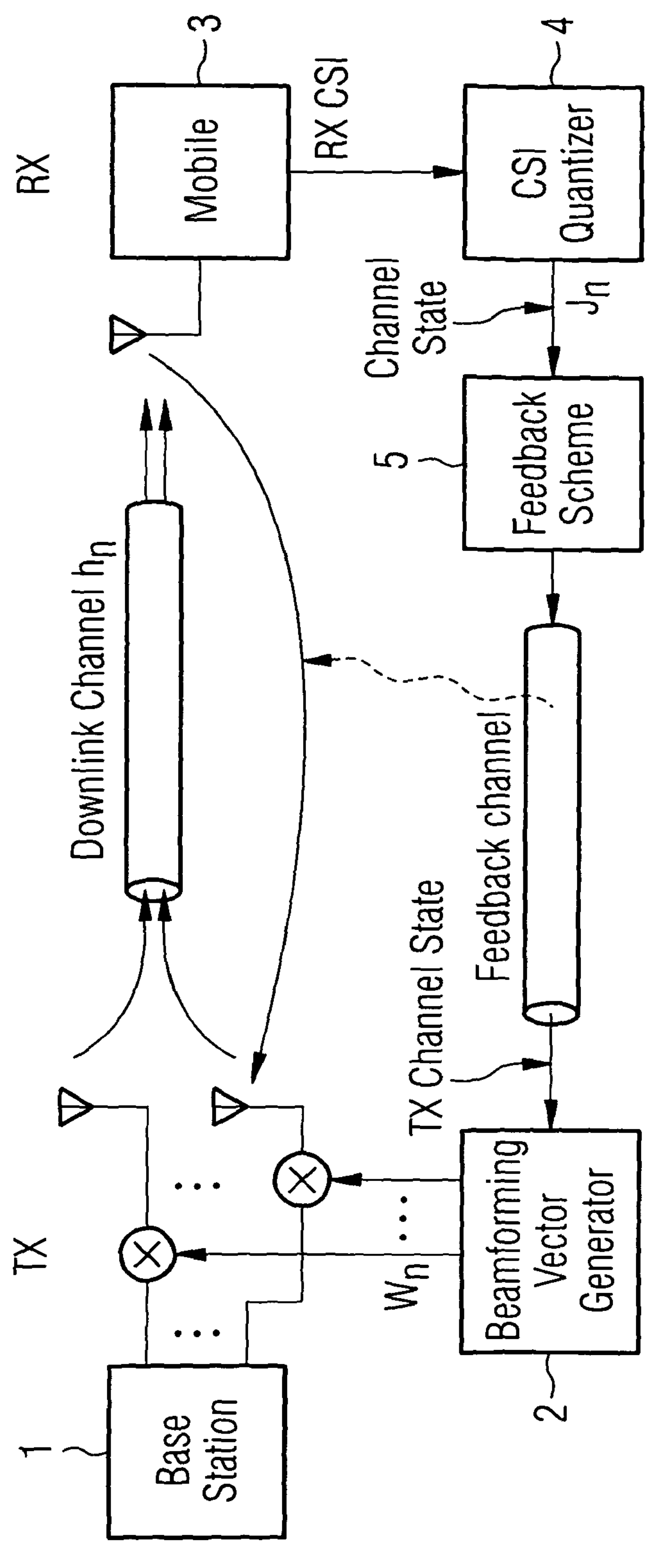

FIG 2

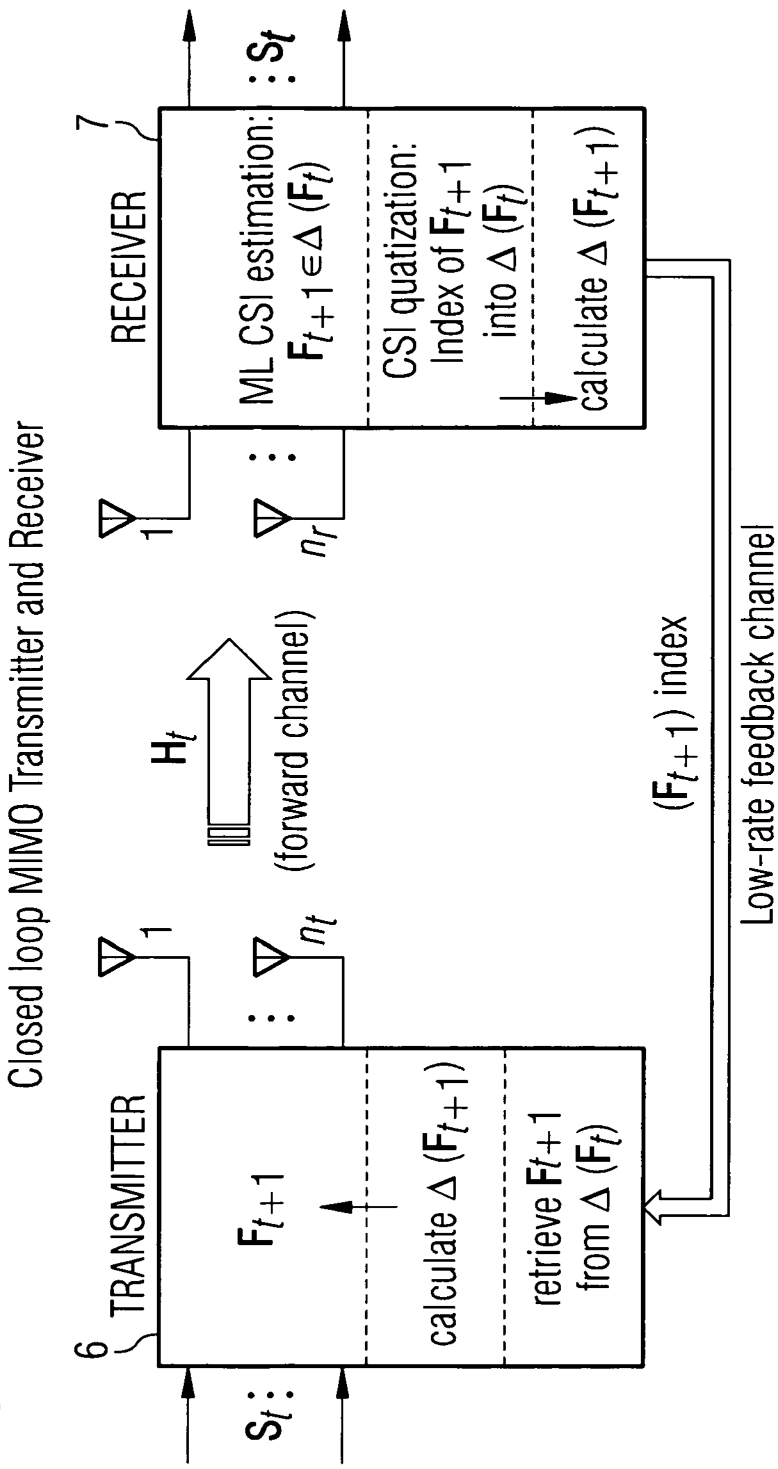
Closed loop MIMO Transmitter and Receiver
TRANSMITTER
6
$F_{t+1}$
calculate $\Delta$ ($F_{t+1}$)
retrieve $F_{t+1}$ from $\Delta$ ($F_t$)
$S_t$
1
$n_t$
$H_t$
(forward channel)
1
$n_r$
RECEIVER
7
ML CSI estimation: $F_{t+1} \in \Delta$ ($F_t$)
CSI quatization: Index of $F_{t+1}$ into $\Delta$ ($F_t$)
calculate $\Delta$ ($F_{t+1}$)
$S_t$
($F_{t+1}$) index
Low-rate feedback channel

FIG 3 Quantization regions for a MISO system

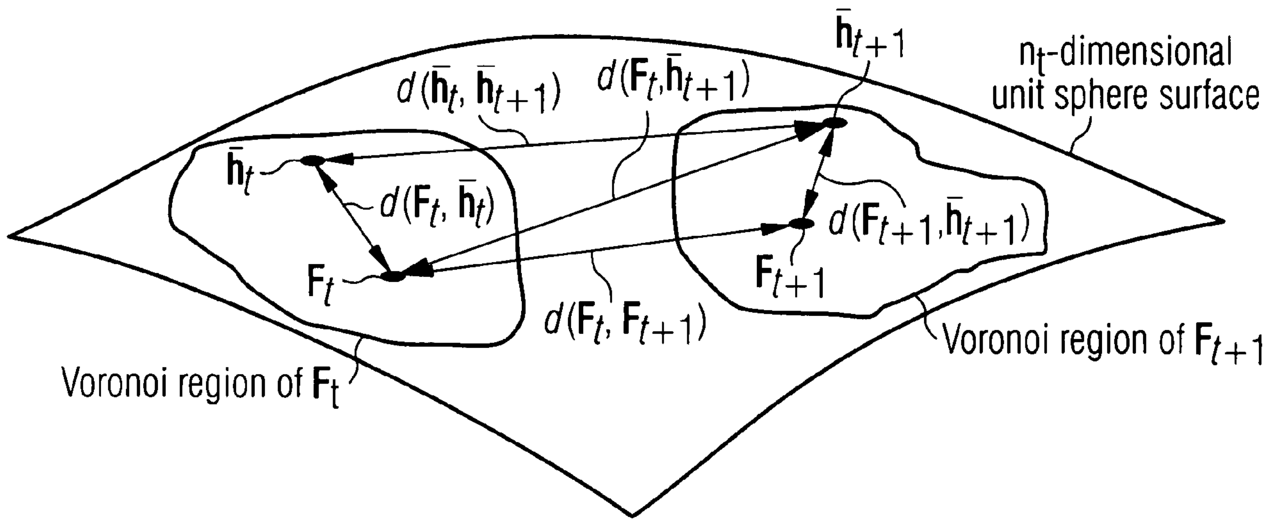


FIG 4 Geometrical model of the correlated channel

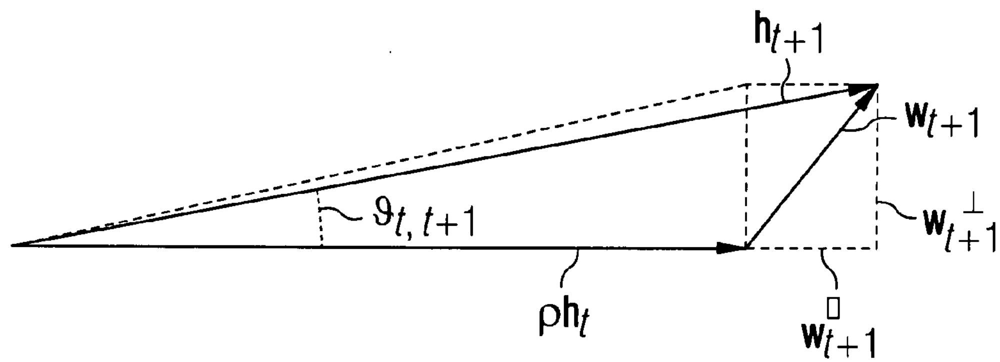

FIG 5

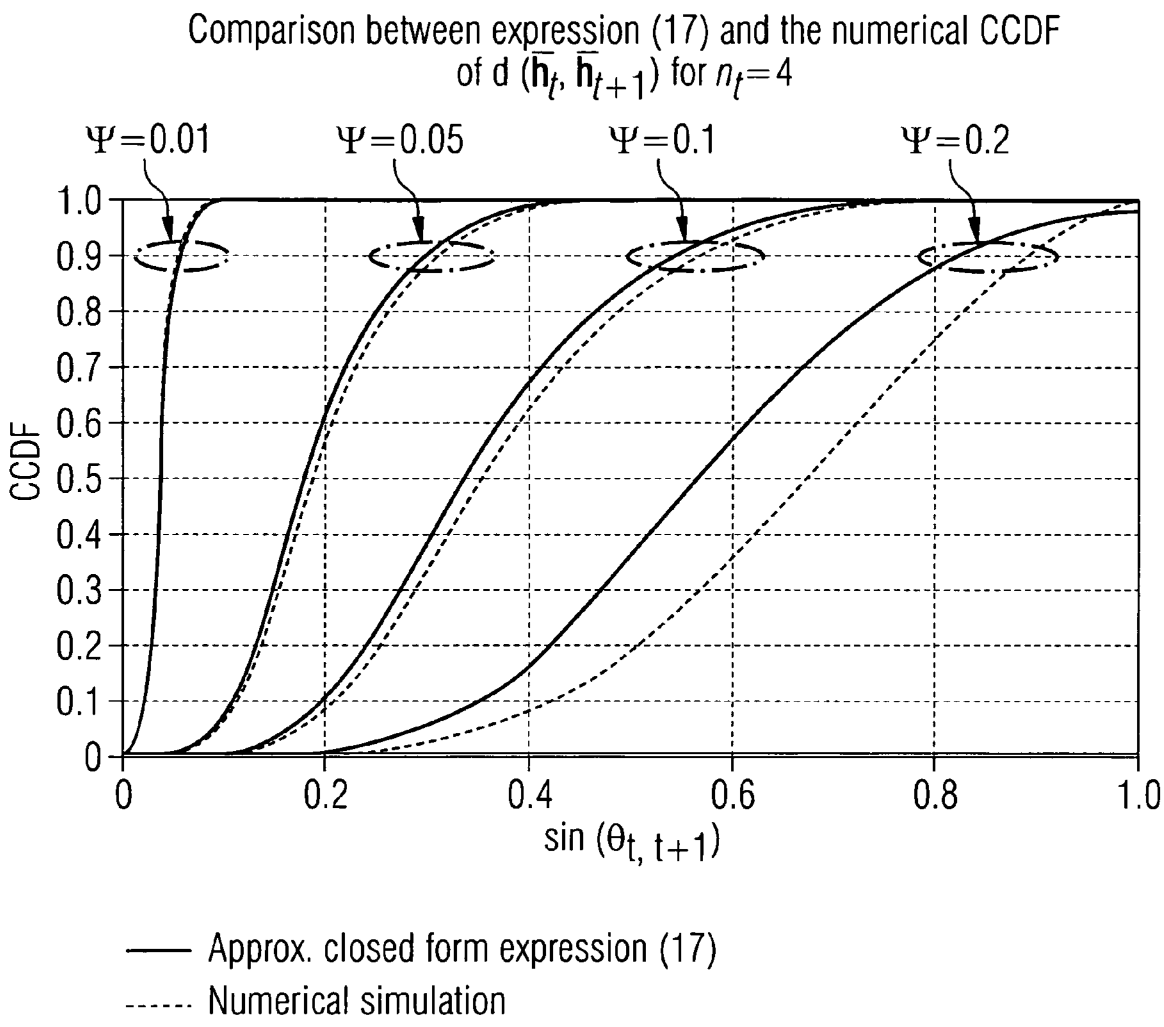
Comparison between expression (17) and the numerical CCDF
of d ($\bar{h}_t$, $\bar{h}_{t+1}$) for $n_t$=4
Ψ=0.01
Ψ=0.05
Ψ=0.1
Ψ=0.2
CCDF
1.0
0.9
0.8
0.7
0.6
0.5
0.4
0.3
0.2
0.1
0
0
0.2
0.4
0.6
0.8
1.0
sin ($\theta_{t, t+1}$)
Approx. closed form expression (17)
Numerical simulation

FIG 6

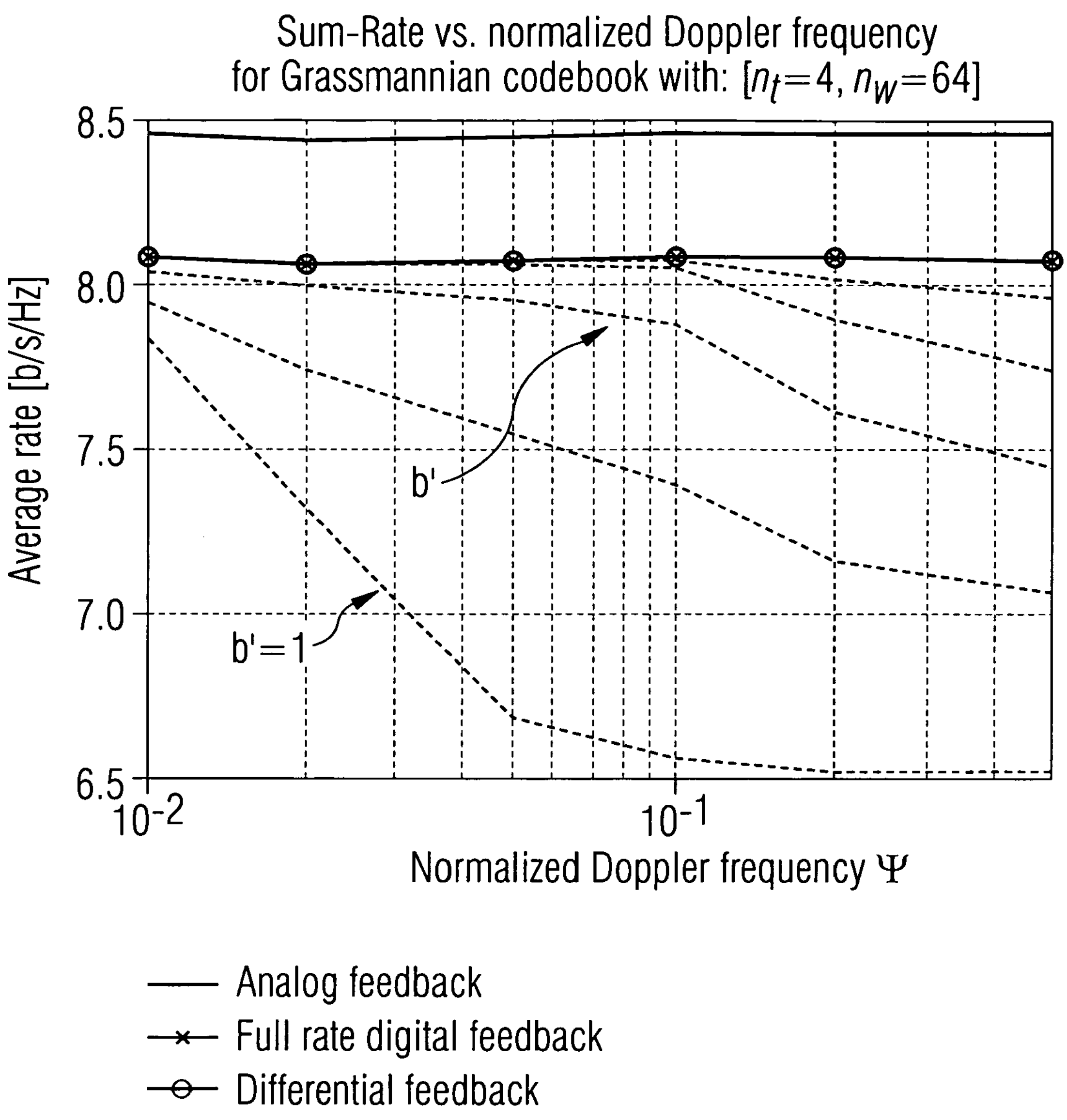
Sum-Rate vs. normalized Doppler frequency
for Grassmannian codebook with: [$n_t$=4, $n_W$=64]
8.5
8.0
7.5
7.0
6.5
Average rate [b/s/Hz]
$10^{-2}$
$10^{-1}$
Normalized Doppler frequency Ψ
b'
b'=1
Analog feedback
Full rate digital feedback
Differential feedback
Adaptive Differential feedback

FIG 7

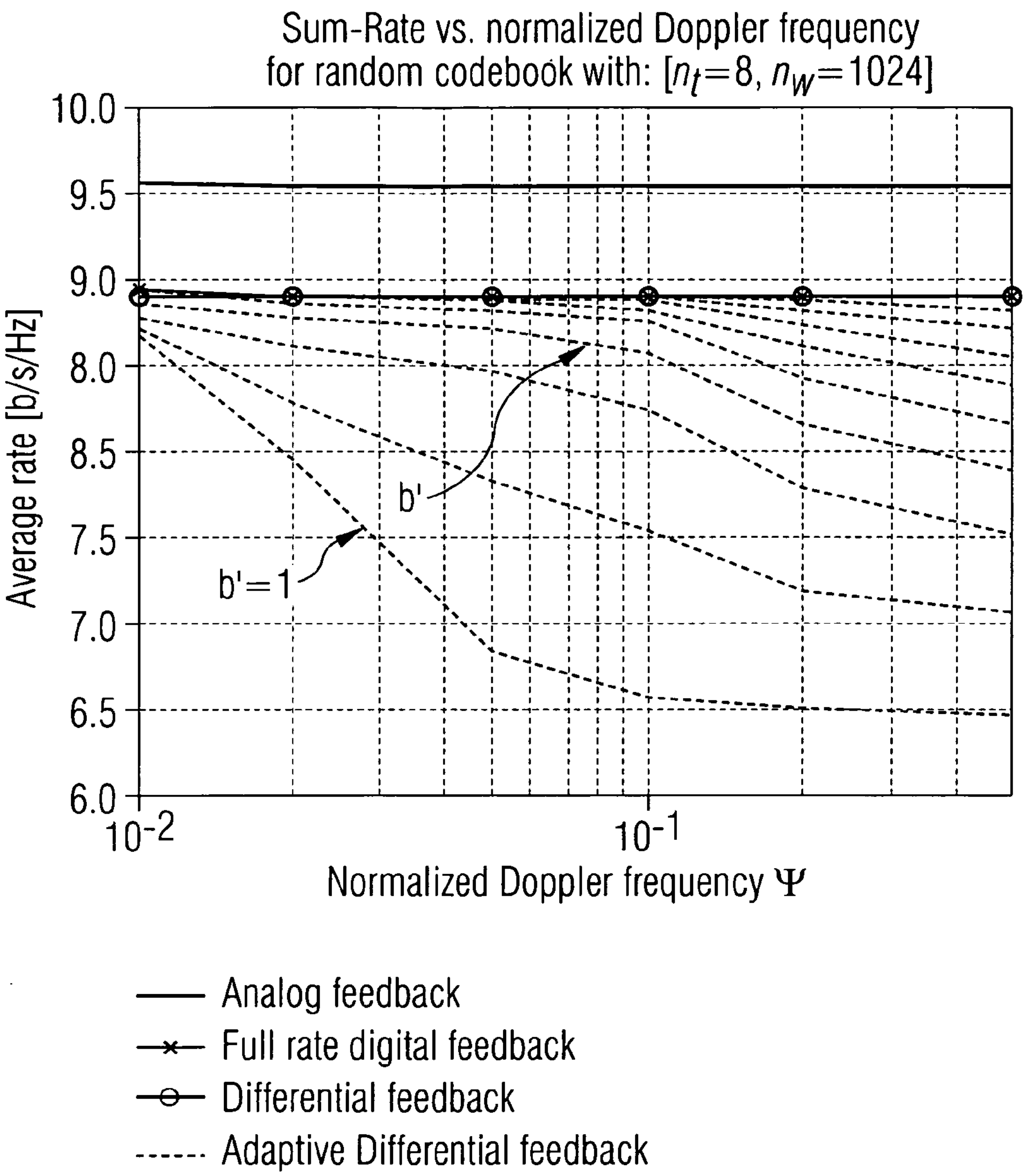
Sum-Rate vs. normalized Doppler frequency
for random codebook with: [$n_t$=8, $n_W$=1024]
Average rate [b/s/Hz]
10.0
9.5
9.0
8.0
8.5
7.5
7.0
6.5
6.0
$10^{-2}$
$10^{-1}$
Normalized Doppler frequency Ψ
b'
b'=1
Analog feedback
Full rate digital feedback
Differential feedback
Adaptive Differential feedback

FIG 8

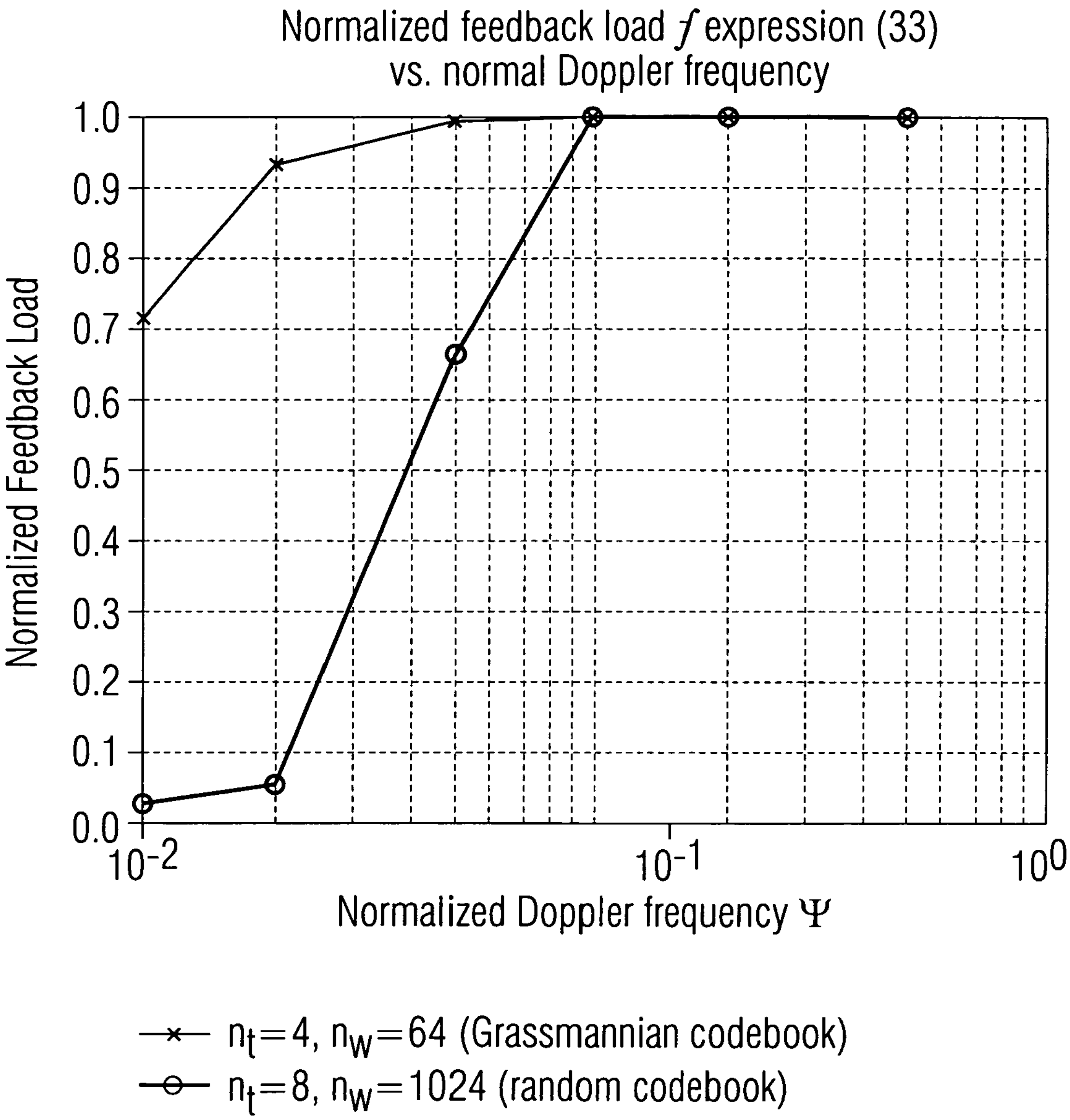
Normalized feedback load f expression (33)
vs. normal Doppler frequency
1.0
0.9
0.8
0.7
0.6
0.5
0.4
0.3
0.2
0.1
0.0
Normalized Feedback Load
10-2
10-1
100
Normalized Doppler frequency Ψ
nt=4, nw=64 (Grassmannian codebook)
nt=8, nw=1024 (random codebook)

European Patent Office

# EUROPEAN SEARCH REPORT

Application Number
EP 07 42 5725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AAZHANG B ET AL: "On beamforming with finite rate feedback in multiple-antenna systems" IEEE TRANSACTIONS ON INFORMATION THEORY, US, vol. 49, no. 10, 1 October 2003 (2003-10-01), pages 2562-2579, XP011102237 ISSN: 0018-9448 * pages 2565 - 2566, Sections III.C and III.D * ----- | 1-11 | INV. H04B7/06 |
| A | KAIBIN HUANG ET AL: "Markov Models for Limited Feedback MIMO Systems" ACOUSTICS, SPEECH AND SIGNAL PROCESSING, 2006. ICASSP 2006 PROCEEDINGS . 2006 IEEE INTERNATIONAL CONFERENCE ON TOULOUSE, FRANCE 14-19 MAY 2006, PISCATAWAY, NJ, USA,IEEE, 1 January 2006 (2006-01-01), pages IV-IV, XP031101134 ISBN: 978-1-4244-0469-8 * pages IV-10 - pages IV-11 * ----- | 1-11 | |
| | | | TECHNICAL FIELDS SEARCHED (IPC) |
| | | | H04B |

The present search report has been drawn up for all claims

| Place of search | Date of completion of the search | Examiner |
|---|---|---|
| Munich | 16 June 2008 | Baltersee, Jens |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **A. PAULRAJ ; R. NABAR ; D. GORE.** Introduction to Space-Time Wireless Communications. Cambridge Univ. Press, May 2003
- **D. J. LOVE ; R. H. HEATH ; T. STROHMER.** Grassmannian Beamforming for Multiple-Input Multiple-Output Wireless Systems. *IEEE Trans. on Inf. Theory,* October 2003, vol. 49, 2735-2747
- **D. J. LOVE ; R. H. HEATH.** Limited Feedback Unitary Precoding for Spatial Multiplexing Systems. *IEEE Trans. on Inf. Theory,* August 2005, vol. 51, 2967-2976
- **N. JINDAL.** MIMO Broadcast Channels with Finite Rate Feedback. *IEEE Trans. on Inf. Theory,* November 2006, vol. 52, 5045-5060
- **B. C. BANISTER ; J. R. ZEIDLER.** Feedback assisted stochastic gradient adaptation of multiantenna transmission. *IEEE Trans. on Wireless Commun.,* 2005, vol. 4 (3), 1121-1135
- **C. SIMON ; G. LEUS.** Feedback reduction for spatial multiplexing with linear precoding. *Proc. IEEE ICASSP,* April 2007
- **K. HUANG ; B. MONDAL ; R. W. HEATH ; J. G. ANDREWS.** Multi-Antenna Limited Feedback for Temporally-Correlated Channels: Feedback Compression. *Proc. Of IEEE Globecom,* 2006
- **K.-B. HUANG ; B. MONDAL ; R. W. HEATH, JR. ; J. G. ANDREWS.** Mutli-antenna limited feedback systems for temporallycorrelated channels: Feedback rate and effect of feedback delay. *IEEE Trans. on Inf. Theory,* March 2006
- Draft standard for local and metropolitan area networks. Part 16: Air Interface for Fixed and Mobile Broadband Wireless Access Systems Corrigendum 2. *IEEE 802.16-2004/Cor2/D4,* May 2007
- **A. BARG ; D. Y. NOGIN.** Bounds on packings of spheres in the Grassmann manifold. *IEEE Trans. on Inf. Theory,* September 2002, vol. 48, 2450-2454
- **J. H. CONWAY ; R. H. HARDIN ; N. J. A. SLOANE.** Packing lines, planes, etc.: Packings in Grassmannian spaces. *Exper. Math.,* 1996, vol. 5 (2), 139-159